# EUROPÄISCHE PATENTANMELDUNG

(11) **EP 2 082 821 A1**
(43) Veröffentlichungstag der Anmeldung: **29.07.2009**
(21) Anmeldenummer: 09000776.6
(22) Anmeldetag: 21.01.2009
(51) Int. Cl.: B23B 27/16

(54) **Zerspanungswerkzeug**

(30) Priorität: 25.01.2008 DE 102008006262; 19.03.2008 DE 202008003866 U
(71) Anmelder: Präzisions-Drehteile Löcher GmbH, 73463 Westhausen (DE)
(72) Erfinder: Löcher, Anton, 73463 Westhausen (DE)
(74) Vertreter: Schmid, Wolfgang

(57) **Zusammenfassung**

Ein Zerspanungswerkzeug, insbesondere ein Drehmeißel, weist einen Grundkörper (2) und eine in einem Aufnahmebereich (3) des Grundkörpers angebrachte Schneidplatte (4) auf. Der Aufnahmebereich (3) für die Schneidplatte (4) weist eine über wenigstens annähernd die gesamte Breite des Grundkörpers (2) verlaufende Vertiefung (5) auf, auf welcher die Schneidplatte (4) aufliegt. Die Schneidplatte (4) liegt an einer ihrer Seitenflächen zumindest mittelbar an einer Seitenwand (6) der Vertiefung (5) und mit einer anderen Seitenfläche an einem austauschbar mit dem Grundkörper (2) verbundenen Anschlagelement (7) an. An der Seitenwand (6) der Vertiefung (5), an welcher die Schneidplatte (4) anliegt, ist eine Aussparung (19) vorgesehen, welche die Anlagefläche für die Schneidplatte (4) derart in zwei Abschnitte teilt, dass die Schneidplatte (4) beiderseits der Aussparung (19) an der Seitenwand (6) anliegt. Das Anschlagelement (7) ist so angeordnet, dass die Schneidplatte (4) in einem von der Mitte ihrer Seitenwand entfernten Bereich an dem Anschlagelement (7) anliegt.

## Beschreibung

Die Erfindung betrifft ein Zerspanungswerkzeug, insbesondere einen Drehmeißel, mit einem Grundkörper und mit einer in einem Aufnahmebereich des Grundkörpers angebrachten Schneidplatte.

Derartige Zerspanungswerkzeuge, die beispielsweise in Form eines Drehmeißels ausgeführt sein können, sind aus dem allgemeinen Stand der Technik bekannt. Um die Schneidplatte an dem Grundkörper anbringen zu können, wird meist eine Vertiefung in dem Grundkörper erzeugt, so dass die Schneidplatte an zwei Seitenwänden der Vertiefung anliegt. Problematisch dabei ist jedoch, dass aufgrund der Herstellung der Vertiefung mittels eines Fräswerkzeugs an einer der Seitenwände der Vertiefung stets eine Aussparung verbleibt, in welche die Schneidplatte meist mit einer Ecke hineinragt. Dadurch liegt ergibt sich eine Beweglichkeit der Schneidplatte während der Zerspanung, was wiederum zu einer Abnutzung des auch als Plattensitz bezeichneten Aufnahmebereichs für die Schneidplatte führt. Dadurch kann sich die Schneidplatte während der Zerspanung in noch größerem Ausmaß bewegen und es kommt häufig, insbesondere beim Auftreten von größeren Schnittkräften, wie zum Beispiel beim Bearbeiten gehärteter Werkstücke, zu einem Verstellen der Schneidplatte, so dass eine sehr schlechte Maßhaltigkeit erreicht wird.

Die genannten Probleme treten insbesondere bei Schneidplatten mit relativ kleinen Eckenwinkeln auf, da der Plattensitz für solche Schneidplatten besonders aufwändig herzustellen ist und sich bei derartigen Schneidplatten eine besonders große Hebelwirkung ergibt, die eine entsprechend große Kraft auf den Plattensitz mit einem entsprechenden Verschleiß desselben zur Folge hat.

Wenn ein solches Zerspanungswerkzeug in Form eines Innendrehmeißels ausgebildet ist, verstärken sich die Probleme noch dadurch, dass sich im Aufnahmebereich für die Schneidplatte Späne ansammeln und eine exakte Einstellung der Schneidplatte weiter erschwert wird.

Ein weiterer Nachteil der bestehenden Zerspanungswerkzeuge ergibt sich bei der Herstellung des Plattensitzes bzw. Aufnahmebereichs für die Schneidplatte durch die Notwendigkeit zur Verwendung von Fräswerkzeugen mit kleinem Durchmesser, was zu langen Bearbeitungszeiten und verhältnismäßig schlechten Oberflächenqualitäten führt.

Aus der EP 1 454 694 A1 ist ein Zerspanungswerkzeug mit einer Schneidplatte bekannt, deren Position mittels einer Feineinstellvorrichtung eingestellt werden kann. Nachteilig bei diesem Werkzeug ist jedoch die Halterung der Schneidplatte, welche bei höheren, auf die Schneidplatte wirkenden Kräften ein Kippen derselben ermöglicht.

Gleiches gilt auch für die in der WO 03/026825 A1 und der WO 2004/018133 A1 beschriebenen Schneidwerkzeuge.

Es ist daher Aufgabe der vorliegenden Erfindung, ein Zerspanungswerkzeug, insbesondere einen Drehmeißel, zu schaffen, bei dem eine bessere Anbringung der Schneidplatte an dem Grundhalter gewährleistet ist.

Erfindungsgemäß wird diese Aufgabe durch die in Anspruch 1 genannten Merkmale gelöst.

Dadurch, dass der Aufnahmebereich für die Schneidplatte über wenigstens annähernd die gesamte Breite des Grundkörpers verläuft und hierfür eine entsprechende Vertiefung gegenüber dem Grundkörper aufweist, kann der Aufnahmebereich vorteilhafterweise sehr einfach mit einem Fräs- oder Schleifwerkzeug größeren Durchmessers hergestellt werden, was zu sehr kurzen Bearbeitungszeiten führt und aufgrund der höheren Schnittgeschwindigkeit auch bessere Oberflächen ermöglicht. Insbesondere die Auflagefläche für die Schneidplatte kann dabei eine sehr hohe Oberflächenqualität aufweisen, da sie im Gegensatz zu der Vorgehensweise bei der Herstellung mittels eines kleineren Fräswerkzeugs mit einem Schnitt erzeugt werden kann.

Erfindungsgemäß liegt die Schneidplatte einerseits an einer Seitenwand der Vertiefung und andererseits an dem gemäß der vorliegenden Erfindung austauschbar mit dem Grundkörper verbundenen Anschlagelement an, wodurch jegliche Bewegungen der Schneidplatte während der Zerspanung vermieden werden, da sich eine sichere Anlage der Schneidplatte an der Seitenwand und dem Anschlagelement ergibt. Dadurch ist im Prinzip kein Nachstellen der Schneidplatte während der Bearbeitung bzw. zwischen zwei Bearbeitungsschritten mehr erforderlich, was erheblich kürzere Bearbeitungszeiten ermöglicht.

Die erfindungsgemäße Lösung ist besonders für Zerspanungswerkzeuge geeignet, die Schneidplatten mit kleinem Eckenwinkel aufweisen, insbesondere bei Drehmeißeln, sie kann jedoch auch bei anderen Zerspanungswerkzeugen eingesetzt werden.

Prinzipiell ist es dabei vorteilhaft, wenn die Vertiefung über die gesamte Breite des Grundkörpers verläuft, da dann wie oben erwähnt eine sehr einfache Herstellbarkeit der Vertiefung gegeben ist, allerdings könnte die Vertiefung auch in einem von der Schneidplatte entfernten, von der Schneidplatte aus betrachtet hinter dem Anschlagelement liegenden Bereich enden, so lange die Schneidplatte nur an einer Seitenwand der Vertiefung anliegt.

Des weiteren ist erfindungsgemäß an der Seitenwand der Vertiefung, an welcher die Schneidplatte anliegt, eine Aussparung vorgesehen. Eine solche Aussparung unterbricht die Anlagefläche für die Schneidplatte und teilt sie in zwei Abschnitte, wodurch vorteilhafterweise verhindert wird, dass sich die Schneidplatte bei sehr hohen Schnittkräften gegenüber der Seitenwand der Vertiefung bewegen und diese dadurch abnutzen kann.

In einer sehr vorteilhaften Weiterbildung der Erfindung kann vorgesehen sein, dass das Anschlagelement eine Schrägfläche zur Anlage der Schneidplatte aufweist. Durch eine solche Schrägfläche an dem Anschlagelement ist es möglich, durch entsprechendes Verstellen des Anschlagelements die Schneidplatte in einem gewissen Maß zu bewegen und dieselbe damit spielfrei einzustellen. Des weiteren kann auf diese Weise die Schneidplatte auf ein bestimmtes Maß eingestellt werden, das sich aufgrund des Anliegens der Schneidplatte an dem Anschlagelement während der Bearbeitung nicht verändert.

In einer besonders einfach zu realisierenden Ausführungsform kann vorgesehen sein, dass die Schrägfläche Teil einer an der dem Außengewinde gegenüberliegenden Seite des Anschlagelements angeordneten Kegelfläche ist.

Alternativ ist es auch möglich, dass das Anschlagelement im wesentlichen zylindrisch ausgebildet ist und an einer dem Grundkörper abgewandten Seite die Schrägfläche aufweist. Bei dieser Ausgestaltung des Anschlagelements ergibt sich eine für bestimmte Anwendungen vorteilhafte Flächenberührung zwischen der Schneidplatte und dem Anschlagelement.

Um das Anschlagelement auf sehr einfache Weise mit dem Grundkörper zu verbinden, kann in einer weiteren vorteilhaften Ausgestaltung der Erfindung vorgesehen sein, dass das Anschlagelement ein Außengewinde aufweist, welches in eine Gewindebohrung des Grundkörpers eingeschraubt ist.

Insbesondere wenn die Schrägfläche Teil eines zylindrischen Anschlagelements ist, kann es vorteilhaft sein, wenn das Anschlagelement auf einem in eine Gewindebohrung des Grundkörpers eingeschraubten Gewindestift aufliegt, da das Anschlagelement dann unabhängig von der Einschraubtiefe zu der Schneidplatte ausgerichtet werden kann.

Um das Anschlagelement exakt innerhalb des Grundkörpers positionieren und eine Bewegung desselben vermeiden zu können, kann in einer vorteilhaften Weiterbildung der Erfindung außerdem vorgesehen sein, dass das Anschlagelement mit einer zylindrischen Passfläche in einer Passbohrung des Grundkörpers geführt ist.

Eine sehr einfache Ausführungsform des Anschlagelements ergibt sich, wenn dasselbe als Stift ausgebildet ist.

Um das Anschlagelement in seiner eingestellten Position zu fixieren, kann in einer weiteren vorteilhaften Ausgestaltung der Erfindung vorgesehen sein, dass das Anschlagelement mittels einer Fixierschraube fixierbar ist.

Eine einfache Befestigung der Schneidplatte ergibt sich, wenn die Schneidplatte mit einer in eine Gewindebohrung des Grundkörpers eingeschraubten Schraube an dem Grundkörper befestigt ist.

In einer weiteren, sehr vorteilhaften Ausgestaltung der Erfindung kann des weiteren vorgesehen sein, dass die Schraube einen Vorsprung aufweist, der im eingeschraubten Zustand der Schraube auf der Schneidplatte aufliegt und diese auf den Grundkörper drückt. Ein derartiger Vorsprung gewährleistet eine besonders gute Fixierung der Schneidplatte gegenüber dem Grundkörper und stellt damit sicher, dass die Schneidplatte auch bei einer schweren Zerspanung ihre Position nicht ändern kann.

In diesem Zusammenhang ist es besonders vorteilhaft, wenn der Vorsprung als umlaufender Bund ausgebildet ist, da der Vorsprung dann zum Einen sehr einfach hergestellt werden kann und zum Anderen die Schraube besonders großflächig an der Schneidplatte anliegt.

Des weiteren kann vorgesehen sein, dass die Schraube unterhalb des Vorsprungs einen konvexen Vorsprung aufweist. Ein solcher konvexer Vorsprung, der dafür vorgesehen ist, an der in der Schneidplatte für die Schraube geschaffenen Bohrung anzuliegen, sorgt dafür, dass die Schraube in der Lage ist, eine besonders hohe Kraft auf die Schneidplatte zur Befestigung derselben aufzubringen.

Nachfolgend ist ein Ausführungsbeispiel der Erfindung anhand der Zeichnung prinzipmäßig dargestellt.

Es zeigt:
- Fig. 1: eine perspektivische Ansicht des erfindungsgemäßen, als Drehmeißel ausgebildeten Zerspanungswerkzeugs;
- Fig. 2: eine Draufsicht auf das erfindungsgemäße Zerspanungswerkzeug;
- Fig. 3: eine vergrößerte Darstellung nach der Linie III-III aus Fig. 2;
- Fig. 4: einen Schnitt nach der Linie IV-IV aus Fig. 2;
- Fig. 5: einen Schnitt nach der Linie V-V aus Fig. 2;
- Fig. 6: eine vergrößerte Darstellung des Anschlagelements des erfindungsgemäßen Zerspanungswerkzeugs;
- Fig. 7: eine vergrößerte Darstellung einer alternativen Ausführungsform des Anschlagelements; und
- Fig. 8: eine Schraube zur Befestigung der Schneidplatte an dem Grundkörper.

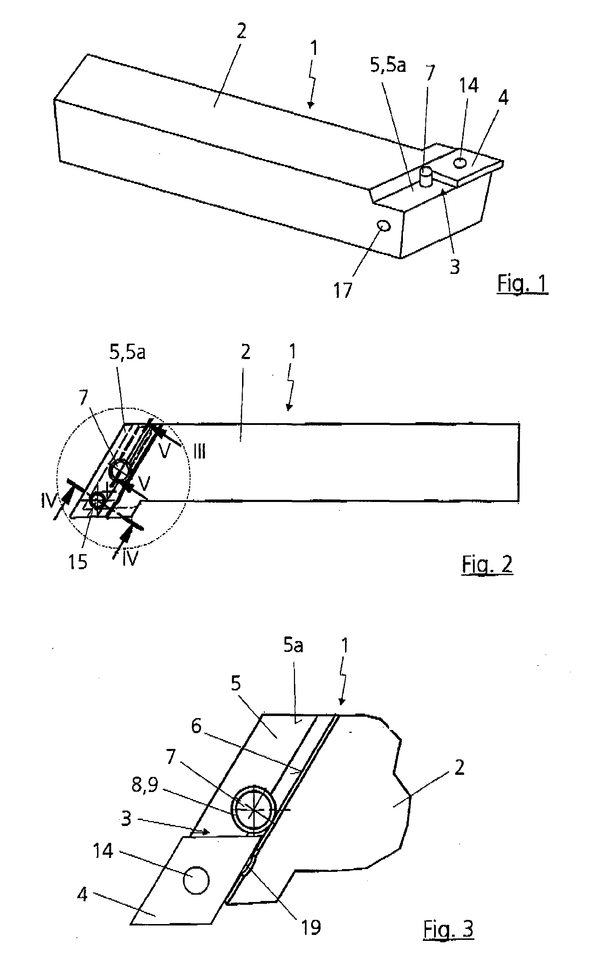

Fig. 1 zeigt eine perspektivische Ansicht eines Zerspanungswerkzeugs 1, das in diesem Fall als Drehmeißel ausgebildet ist. Das Zerspanungswerkzeug 1 weist einen Grundkörper 2 auf, mit dem das Zerspanungswerkzeug 1 in einer entsprechenden, nicht dargestellten Werkzeugaufnahme eingespannt werden kann. Der Grundkörper 2 weist einen Aufnahmebereich 3 auf, in welchem eine Schneidplatte 4 angebracht ist, die in an sich bekannter Weise zur Zerspanung eines nicht dargestellten Werkstücks dient.

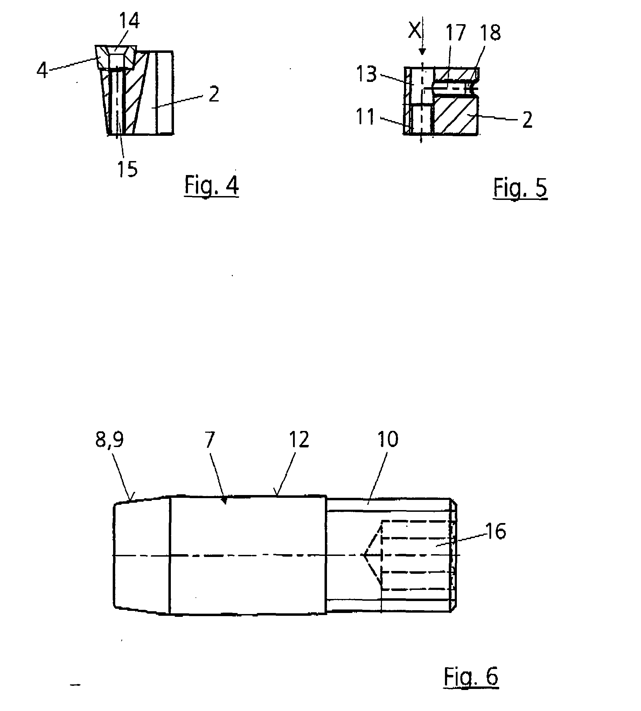

In Fig. 3 ist die Anbringung der Schneidplatte 4 an dem Aufnahmebereich 3 des Grundkörpers 2 in vergrößertem Maßstab dargestellt. Hieraus geht zusammen mit dem Schnitt von Fig. 4 hervor, dass der Aufnahmebereich 3 für die Schneidplatte 4 eine über die gesamte Breite des Grundkörpers 2 verlaufende Vertiefung 5 aufweist, die eine Auflagefläche 5a aufweist, auf welcher die Schneidplatte 4 aufliegt. Die Vertiefung 5 kann auf sehr einfache Weise bzw. durch Fräsen oder Schleifen hergestellt werden, weil aufgrund der einfachen Kontur der Vertiefung 5 ein Fräs- oder Schleifwerkzeug mit einem sehr großen Durchmesser und einer entsprechend hohen Zerspanungsleistung eingesetzt werden kann.

In der Draufsicht gemäß Fig. 3 ist zu erkennen, dass die Schneidplatte 4 mit einer ihrer Seitenflächen an der Seitenwand 6 der Vertiefung 5 und mit einer anderen, der ersten Seitenfläche nicht gegenüberliegenden, sondern an diese angrenzenden Seitenfläche an einem austauschbar an dem Grundkörper 2 angebrachten Anschlagelement 7 anliegt. Das im vorliegenden Fall als Stift ausgebildete Anschlagelement 7 weist eine Schrägfläche 8 zur Anlage der Schneidplatte 4 auf, die in der vergrößerten Darstellung des Anschlagelements 7 gemäß Fig. 6 besser zu erkennen ist. Im vorliegenden Fall ist die Schrägfläche, wie in Fig. 6 erkennbar ist, Teil einer an der dem Grundkörper 2 abgewandten Seite des Anschlagelements 7 angeordneten Kegelfläche 9. Des weiteren ist das Anschlagelement 7 mit einem Außengewinde 10 versehen, welches sich an der der Kegelfläche 9 gegenüberliegenden Seite des Anschlagelements 7 befindet. Aus dem Schnitt gemäß Fig. 5 geht hervor, dass das Anschlagelement 7 mittels des Außengewindes 10 in eine Gewindebohrung 11 des Grundkörpers 2 eingeschraubt ist. In Fig. 6 wiederum ist zu erkennen, dass das Anschlagelement 7 zwischen dem Außengewinde 10 und der Kegelfläche 9 einen als zylindrische Passfläche 12 ausgebildeten zylindrischen Abschnitt aufweist, über welchen das Anschlagelement 7 in einer sich an die Gewindebohrung 11 anschließenden Passbohrung 13 des Grundkörpers 2 exakt geführt ist.

Die Schneidplatte 4 wird folgendermaßen an dem Grundkörper 2 angebracht: zunächst wird das Anschlagelement 7 von oben in der in Fig. 5 mit "X" bezeichneten Richtung in die Passbohrung 13 eingeführt und das Außengewinde 10 wird in die Gewindebohrung 11 eingeschraubt. Um das Einführen des Anschlagelements 7 durch die Passbohrung 13 zu ermöglichen, weist das Außengewinde 10 einen kleineren Durchmesser auf als der zylindrische Abschnitt 12. Anschließend wird die Schneidplatte 4 auf der Auflagefläche 5a der Vertiefung 5 aufgelegt und mittels einer Schraube 14, die in eine in Fig. 4 dargestellte Gewindebohrung 15 des Grundkörpers 2 eingeschraubt wird, mit dem Grundkörper 2 verschraubt. Die Schraube 14 wird jedoch nur so fest angezogen, dass die Schneidplatte 4 noch in einem gewissen Maß auf der Auflagefläche 5a bewegt werden kann. Dann wird das Anschlagelement 7 innerhalb der Gewindebohrung 11 und der Passbohrung 13 so eingestellt, dass die Schrägfläche 8 an der Schneidplatte 4 anliegt. Hierzu weist das Anschlagelement 7 auf der der Schrägfläche 8 gegenüberliegenden Seite einen Innensechskant 16 auf, der wiederum in der vergrößerten Darstellung von Fig. 6 zu erkennen ist. Sobald die Schneidplatte 4 in die gewünschte Position, nämlich die Anlage an der Seitenwand 6 einerseits und an dem Anschlagelement 7 andererseits, gebracht wurde, wird die Schraube 14 angezogen, um die Schneidplatte 4 endgültig fest mit dem Grundkörper 2 zu verbinden. Zum Fixieren des Anschlagelements 7, um eine unerwünschte Bewegung desselben zu verhindern, dient eine Fixierschraube 17, die in eine in Fig. 5 dargestellte Gewindebohrung 18 eingeschraubt werden kann und auf den zylindrischen Abschnitt 12 des Anschlagelements 7 drückt. Durch Herausschrauben des Anschlagelements 7 aus der Gewindebohrung 11 des Grundkörpers 2 kann das Anschlagelement 7 nachgestellt werden, um es an die Schneidplatte 4 anzulegen, falls diese sich von dem Anschlagelement 7 wegbewegt hat. Hierzu muss selbstverständlich zunächst die Fixierschraube 17 gelöst werden.

Die Seitenwand 6, an der die Schneidplatte 4 anliegt, weist im vorliegenden Fall einen dem Freiwinkel der Schneidplatte 4 entsprechenden Winkel gegenüber der Auflagefläche 5a auf, sodass sich eine gute Anlage der Schneidplatte 4 an der Seitenwand 6 ergibt. Dies gilt auch für die Schrägfläche 8 des Anschlagelements 7, deren Winkel ebenfalls dem Freiwinkel der Schneidplatte 4 entspricht und beispielsweise 7° betragen kann. Im Fall von Schneidplatten 4 ohne Freiwinkel können die Gewindebohrung 11 und die Passbohrung 13 auch schräg in den Grundkörper 2 eingebracht werden, um eine Verstellung der Schneidplatte 4 mittels des dann schräg gegenüber dem Grundkörper 2 montierten Anschlagelements 7 erreichen zu können. Des weiteren ist es möglich, die Schrägfläche 8 an einem zylindrischen Abschnitt des Anschlagelements 7 anzubringen und auf die Kegelfläche 9 zu verzichten.

Um die Anlagefläche der Schrägplatte 4 ungefähr in der Mitte zu unterbrechen und somit ein Kippen der Schneidplatte 4 noch wirksamer zu verhindern, ist an der Seitenwand 6 der Vertiefung 5 in der dargestellten Ausführungsform des Zerspanungswerkzeugs 1 eine Aussparung 19 vorgesehen, die im vorliegenden Fall als Radius ausgebildet ist.

Bei der dargestellten Ausführungsform liegt die Schneidplatte 4 unmittelbar an der Seitenwand 6 der Vertiefung 5 an. Es wäre jedoch auch möglich, an der Seitenwand 6 einen über die Seitenwand 6 vorstehenden, nicht dargestellten Stift anzuordnen, an dem die Schneidplatte 4 anliegen könnte, so dass sie an diesem Stift und an dem Anschlagelement 7 anliegen würde. Dadurch wäre ein mittelbares Anliegen der Schneidplatte 4 an der Seitenwand 6 der Vertiefung 5 gegeben. Ein solcher zusätzlicher Stift könnte im Verschleißfall besonders einfach und kostengünstig ersetzt werden.

Im vorliegenden Fall ist das Zerspanungswerkzeug 1 als Außendrehmeißel ausgebildet, die beschriebene Anbringung der Schneidplatte 4 wäre jedoch auch bei einem Innendrehmeißel möglich. Des weiteren könnte die beschriebene Anbringung der Schneidplatte 4 gegenüber dem Grundkörper 2 auch bei einem Säg-, Fräs- oder einem anderen Zerspanungswerkzeug vorgesehen sein.

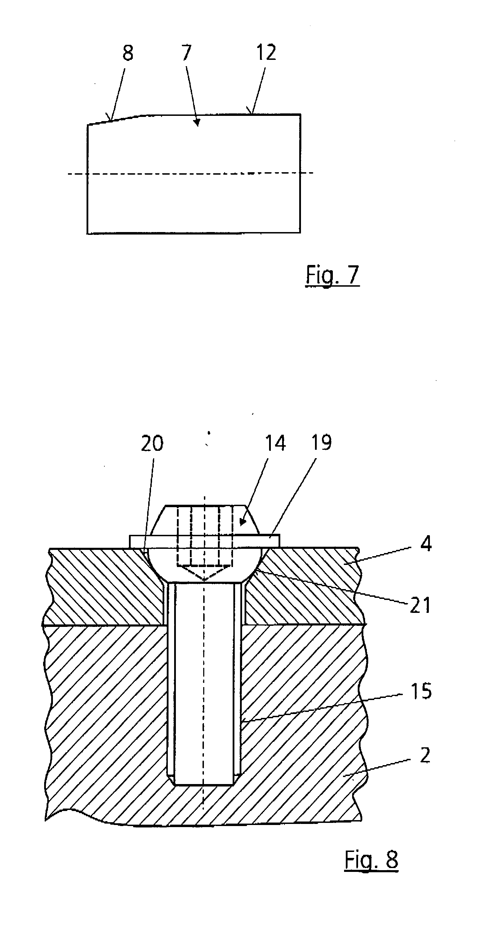

In Fig. 7 ist eine alternative Ausführungsform des Anschlagelements 7 dargestellt. Dieses ist im Querschnitt im wesentlichen zylindrisch ausgebildet und weist an der dem Grundkörper 2 abgewandten Seite die Schrägfläche 8 auf, deren Winkel wiederum im wesentlichen dem Freiwinkel der Schneidplatte 4 entspricht. Die in den Grundkörper 2 eingeführte Seite des Anschlagelements 7 ist auch hierbei als Passfläche 12 ausgebildet.

Dadurch, dass die Schrägfläche 8 bei dieser Ausführungsform also nicht Teil einer Kegelfläche ist, kommt es im Gegensatz zu der in Fig. 6 dargestellten Ausführungsform nicht zu einer Linien- sondern zu einer Flächenberührung zwischen dem Anschlagelement 7 und der Schneidplatte 4. Dadurch können insbesondere bei einer schwereren Zerspanung, wie z. B. einer Schruppbearbeitung, höhere Kräfte aufgenommen werden. Um die Schrägfläche 8 des Anschlagelements 7 gegenüber der Schneidplatte 4 ausrichten zu können, liegt in diesem Fall das Anschlagelement 7 auf einem in die Gewindebohrung 11 des Grundkörpers 2 eingeschraubten, nicht dargestellten Gewindestift auf. Durch eine Verdrehung des Gewindestifts in der Gewindebohrung 11 kann dann zwar das Anschlagelement 7 in axialer Richtung desselben verschoben werden, dies geschieht jedoch unabhängig von der Winkellage der Schrägfläche 8.

Eine alternative Ausführungsform der zum Zwecke der Befestigung der Schneidplatte 4 auf der Auflagefläche 5a der Vertiefung 5 in die Gewindebohrung 15 des Grundkörpers 2 eingeschraubten Schraube 14 ist in Fig. 8 dargestellt. Dabei ist zu erkennen, dass die Schraube 14 einen im vorliegenden Fall als umlaufenden Bund ausgebildeten Vorsprung 19 aufweist, der im eingeschraubten Zustand der Schraube 14 auf der Schneidplatte 4 aufliegt und diese so noch stärker als dies bei der Ausführungsform der Schraube 14 gemäß Fig. 5 der Fall ist, auf den Grundkörper 2 drückt. Auch dies trägt zu einer besseren Befestigung der Schneidplatte 4 auf dem Grundkörper 2 bei, wodurch Vibrationen der Schneidplatte 4 vermieden werden.

Um die Schraube 14 gegenüber einer dieselbe aufnehmenden Bohrung 20 in der Schneidplatte 4 zu zentrieren, weist die Schraube 14 einen im vorliegenden Fall konvex bzw. sphärisch ausgebildeten Vorsprung 21 auf, der an der im oberen Bereich konischen Fläche der Bohrung 20 anliegt und die Schneidplatte 4 damit zu der Gewindebohrung 15 zentriert. Der Vorgang beim Anziehen der Schraube 14 kann wie oben unter Bezugnahme auf die andere Ausführungsform derselben beschrieben durchgeführt werden.

## Patentansprüche

1. Zerspanungswerkzeug, insbesondere Drehmeißel, mit einem Grundkörper (2) und mit einer in einem Aufnahmebereich (3) des Grundkörpers angebrachten Schneidplatte (4), wobei der Aufnahmebereich (3) für die Schneidplatte (4) eine über wenigstens annähernd die gesamte Breite des Grundkörpers (2) verlaufende Vertiefung (5) aufweist, auf welcher die Schneidplatte (4) aufliegt, wobei die Schneidplatte (4) mit einer ihrer Seitenflächen zumindest mittelbar an einer Seitenwand (6) der Vertiefung (5) und mit einer anderen Seitenfläche an einem austauschbar mit dem Grundkörper (2) verbundenen Anschlagelement (7) anliegt, wobei an der Seitenwand (6) der Vertiefung (5), an welcher die Schneidplatte (4) anliegt, eine Aussparung (19) vorgesehen ist, welche die Anlagefläche für die Schneidplatte (4) derart in zwei Abschnitte teilt, dass die Schneidplatte (4) beiderseits der Aussparung (19) an der Seitenwand (6) anliegt, und wobei das Anschlagelement (7) so angeordnet ist, dass die Schneidplatte (4) in einem von der Mitte ihrer Seitenwand entfernten Bereich an dem Anschlagelement (7) anliegt.

2. Zerspanungswerkzeug nach Anspruch 1,
**dadurch gekennzeichnet, dass**
das Anschlagelement (7) eine Schrägfläche (8) zur Anlage der Schneidplatte (4) aufweist.

3. Zerspanungswerkzeug nach Anspruch 2,
**dadurch gekennzeichnet, dass**
die Schrägfläche (8) Teil einer an der dem Grundkörper (2) abgewandten Seite des Anschlagelements (7) angeordneten Kegelfläche (9) ist.

4. Zerspanungswerkzeug nach Anspruch 2,
**dadurch gekennzeichnet, dass**
das Anschlagelement (7) im wesentlichen zylindrisch ausgebildet ist und an einer dem Grundkörper (2) abgewandten Seite die Schrägfläche (8) aufweist.

5. Zerspanungswerkzeug nach einem der Ansprüche 1 bis 4,
**dadurch gekennzeichnet, dass**
das Anschlagelement (7) ein Außengewinde (10) aufweist, welches in eine Gewindebohrung (11) des Grundkörpers (2) eingeschraubt ist.

6. Zerspanungswerkzeug nach einem der Ansprüche 1 bis 4,
**dadurch gekennzeichnete dass**
das Anschlagelement (7) auf einem in eine Gewindebohrung (11) des Grundkörpers (2) eingeschraubten Gewindestift aufliegt.

7. Zerspanungswerkzeug nach einem der Ansprüche 1 bis 6,
**dadurch gekennzeichnet, dass**
das Anschlagelement (7) mit einer zylindrischen Passfläche (12) in einer Passbohrung (13) des Grundkörpers (2) geführt ist.

8. Zerspanungswerkzeug nach einem der Ansprüche 1 bis 5,
**dadurch gekennzeichnet, dass**
das Anschlagelement (7) als Stift ausgebildet ist.

9. Zerspanungswerkzeug nach einem der Ansprüche 1 bis 8,
**dadurch gekennzeichnet, dass**
an der Seitenwand (6) der Vertiefung (5), an welcher die Schneidplatte (4) anliegt, eine Aussparung (19) vorgesehen ist.

10. Zerspanungswerkzeug nach einem der Ansprüche 1 bis 9,
**dadurch gekennzeichnet, dass**
das Anschlagelement (7) mittels einer Fixierschraube (17) fixierbar ist.

11. Zerspanungswerkzeug nach einem der Ansprüche 1 bis 10,
**dadurch gekennzeichnet, dass**
die Schneidplatte (4) mit einer in eine Gewindebohrung (15) des Grundkörpers (2) eingeschraubten Schraube (14) an dem Grundkörper (2) befestigt ist.

12. Zerspanungswerkzeug nach Anspruch 11,
**dadurch gekennzeichnet, dass**
die Schraube (14) einen Vorsprung (19) aufweist, der im eingeschraubten Zustand der Schraube (14) auf der Schneidplatte (4) aufliegt und diese auf den Grundkörper (2) drückt.

13. Zerspanungswerkzeug nach Anspruch 12,
**dadurch gekennzeichnet, dass**
der Vorsprung (19) als umlaufender Bund ausgebildet ist.

14. Zerspanungswerkzeug nach Anspruch 12 oder 13,
**dadurch gekennzeichnet, dass**
die Schraube (14) unterhalb des Vorsprungs (19) einen konvexen Vorsprung (21) aufweist.
